**Europäisches Patentamt**

**European Patent Office**

**Office européen des brevets**

(11) Numéro de publication : **0 346 170 B1**

(19)

(12) **FASCICULE DE BREVET EUROPEEN**

(45) Date de publication du fascicule du brevet :
**21.10.92 Bulletin 92/43**

(21) Numéro de dépôt : **89401319.2**

(22) Date de dépôt : **11.05.89**

(51) Int. Cl.⁵ : **G21C 17/10**

(54) **Dispositif de mesure de paramètres dans le coeur d'un réacteur nucléaire en service.**

(30) Priorité : **06.06.88 FR 8807497**

(43) Date de publication de la demande :
**13.12.89 Bulletin 89/50**

(45) Mention de la délivrance du brevet :
**21.10.92 Bulletin 92/43**

(84) Etats contractants désignés :
**BE CH DE ES GB LI SE**

(56) Documents cités :
**DE-A- 2 832 122**
**FR-A- 2 081 077**
**FR-A- 2 607 309**
**US-A- 3 766 005**

(73) Titulaire : **FRAMATOME**
**Tour Fiat 1, Place de la Coupole**
**F-92400 Courbevoie (FR)**

(72) Inventeur : **Feurgard, René 11 Les Passereaux**
**Domaine Saint-François d'Assise**
**F-78170 La Celle Saint Cloud (FR)**

(74) Mandataire : **Bouget, Lucien et al**
**Cabinet Lavoix 2, Place d'Estienne d'Orves**
**F-75441 Paris Cédex 09 (FR)**

## Description

L'invention concerne un dispositif de mesure de paramètres dans le coeur d'un réacteur nucléaire en service et en particulier d'un réacteur nucléaire a eau sous pression.

Les réacteurs nucléaires à eau sous pression comportent une cuve remplie, lorsque le réacteur est en fonctionnement, par un fluide de refroidissement qui est constitué par de l'eau sous pression. Le coeur du réacteur constitué par des assemblages combustibles est entièrement plongé dans l'eau de refroidissement.

Dans l'exploitation des réacteurs nucléaires tels que les réacteurs nucléaires à eau sous pression, il est nécessaire d'effectuer des mesures dans le coeur, pendant le fonctionnement du réacteur. Il est en particulier nécessaire d'effectuer des mesures de flux neutronique à différents endroits suivant la hauteur du coeur pour connaître la répartition de flux neutronique ou de puissance, suivant la direction axiale du coeur qui correspond généralement à la direction verticale.

Les assemblages combustibles constituant le coeur comportent à leur partie centrale un tube d'instrumentation dans lequel on peut introduire, sur toute la hauteur du coeur, un doigt de gant étanche à l'intérieur duquel on déplace une sonde de mesure de flux neutronique, pendant le fonctionnement du réacteur.

Les doigts de gant associés à chacun des assemblages combustibles dans lequels on réalise des mesures de flux doivent pouvoir être extraits de ces assemblages, par exemple lorsqu'on effectue le rechargement du coeur. Ces doigts de gant sont donc montés mobiles et glissants à l'intérieur de tubes de guidage joignant la partie inférieure de la cuve à une salle de mesure ou local d'instrumentation dans lequel les extrémités des doigts de gant opposées aux extrémités introduites dans le coeur sont accessibles pour le déplacement des sondes, pour le recueil des signaux de mesure et pour le déplacement des doigts de gant à l'intérieur des tubes de guidage. Le déplacement des doigts de gant dans les tubes de guidage se fait par simple poussée ou traction, un jeu suffisant étant prévu pour limiter les efforts à exercer sur le doigt de gant, malgré la forme courbe des tubes de guidage sur la plus grande partie de leur parcours.

En plus des sondes mobiles de mesure de flux neutronique, on utilise également un ensemble de dispositifs de mesure de flux tels que des collectrons placés en position fixe dans le coeur et à différents niveaux suivant sa hauteur.

Il est également nécessaire d'utiliser, pendant le fonctionnement du réacteur, des dispositifs de mesure de température, de pression ou de niveau qui sont mis en place dans le coeur en différents emplacements déterminés.

Dans le but de simplifier l'instrumentation du coeur ainsi que les procédures d'utilisation et d'entretien de cette instrumentation, on a proposé de placer l'ensemble des dispositifs de mesure relatifs à un assemblage du coeur dans lequel on réalise des mesures à l'intérieur d'un conduit de support et de positionnement étanche et conçu de manière analogue au conduit recevant la sonde mobile. Un tel conduit comporte une enveloppe tubulaire externe dans laquelle est montée en position centrale et coaxialement à l'enveloppe une gaine ou doigt de gant permettant le guidage d'une sonde mobile de mesure de flux neutronique. Des dispositifs de mesure tels que des collectrons sont placés dans le conduit, autour de la gaine centrale et dans des positions fixes réparties suivant la longueur du conduit. Le conduit de support et de positionnement des dispositifs de mesure présente un diamètre un peu inférieur au diamètre d'un tube de guidage permettant son déplacement et joignant la partie inférieure de la cuve au local d'instrumentation. Le conduit peut être mis en place dans le coeur ou extrait du coeur depuis le local d'instrumentation, par simple poussée ou traction sur son extrémité. A l'intérieur du local d'instrumentation, le conduit de mesure est monté de manière glissante et étanche à l'intérieur d'une buselure rigidement solidaire de l'extrémité du tube de guidage correspondant.

Il est bien sûr nécessaire d'utiliser un doigt de gant central et une sonde de mesure de flux neutronique miniaturisés par rapport à la technique antérieure, les tubes d'instrumentation des assemblages étant les mêmes que ceux qui étaient destinés à recevoir les seuls doigts de gant. De même, les passages réservés aux conduits de support et de positionnement des dispositifs de mesure dans les structures internes de la cuve du réacteur, entre le fond de cuve et la base du coeur, ainsi que les tubes de guidage sont les mêmes que ceux qui étaient utilisés pour le guidage des seuls doigts de gant.

Ces conduits ou cannes de mesure doivent présenter une flexibilité suffisante pour pouvoir être déplacés sans effort excessif par poussée et par traction à l'intérieur des tubes de guidage cintrés joignant le local d'instrumentation au fond de cuve. L'enveloppe externe de ces conduits ou cannes de mesure doit d'autre part supporter des efforts importants dans un fluide à haute température et à haute pression et sous irradiation. Cette enveloppe externe étanche doit en particulier résister à la pression de l'eau de refroidissement primaire qui s'exerce sur sa paroi pendant le fonctionnement du réacteur.

Pour éviter de soumettre la paroi du conduit de mesure à la pression du fluide de refroidissement primaire du réacteur, on a proposé, dans FR-A-2 607 309, de réaliser le conduit de mesure sous une forme telle qu'il soit en contact avec le fluide primaire, aussi bien sur sa surface externe que sur sa surface interne. Le conduit de mesure est réalisé sous la forme d'un ensemble tubulaire ouvert comportant des tronçons de tube souple reliés entre eux par des entretoises dans lesquelles sont placés les sondes de mesure périphériques. Le doigt de gant central placé de manière coaxiale par rapport au conduit est réalisé sous forme étanche et de manière à résister à la pression du fluide primaire avec lequel il est en contact par sa paroi externe. Les sondes de mesure périphériques sont directement plongées dans le fluide primaire à l'intérieur du conduit de mesure. La position des sondes périphériques suivant la longueur du conduit est parfaitement déterminée par la position des entretoises reliées par des longueurs variables de tubes souples métalliques.

Un tel dispositif présente l'avantage de pouvoir être réalisé sous une forme à la fois souple et résistante et de permettre une mise en place facilitée de l'instrumentation dans le coeur du réacteur.

Cependant, dans le cas où une sonde de mesure périphérique est devenue défectueuse en service, il est nécessaire pour effectuer son remplacement de sortir l'ensemble du conduit de mesure du tube de guidage correspondant et d'en effectuer la réparation en atelier.

D'autre part, il n'est pas possible de modifier la position des sondes, celles-ci étant déterminée une fois pour toutes, lors de la conception du conduit de mesure.

Enfin, les tubes de guidage vers les différents assemblages dans lesquels on effectue des mesures sont de longueurs différentes et nécessitent la conception de conduits de mesure adaptés à chaque cas particulier. Cette obligation crée des problèmes difficiles à résoudre sur le plan de la fabrication, du stockage et du remplacement des conduits de mesure.

Le but de l'invention est donc de proposer un dispositif de mesure de paramètres dans le coeur d'un réacteur nucléaire en service plongé dans un fluide de refroidissement du réacteur remplissant la cuve, comportant un conduit de mesure en contact avec l'eau de refroidissement extérieurement et intérieurement, à l'intérieur duquel sont placées, en position centrale et de manière coaxiale, une gaine fermée et étanche pour le guidage d'une sonde mobile de mesure de flux neutronique, et, dans des positions périphériques, une pluralité de sondes de mesure de paramètres physiques du coeur, le conduit de mesure étant monté mobile dans un tube de guidage joignant la cuve du réacteur à un local d'instrumentation dans lequel le conduit de mesure pénètre, en traversant de manière glissante et étanche, une buselure d'étanchéité solidaire de l'extrémité du tube de guidage, ce dispositif de mesure permettant d'effectuer facilement le remplacement et le positionnement des sondes de mesure périphériques et d'utiliser un seul type de conduit de mesure pour équiper l'ensemble des tubes de guidage du réacteur.

Dans ce but, les sondes de mesure périphériques sont fixées à l'extrémité de câbles souples de mesure et de déplacement, elles sont montées mobiles chacune à l'intérieur d'une gaine périphérique étanche, une pluralité de gaines périphériques étant montées à l'intérieur du conduit de mesure autour de la gaine centrale suivant une disposition hélicoïdale et la buselure comporte une chambre étanche isolée par rapport au fluide primaire de refroidissement et au local d'instrumentation dans laquelle débouchent les gaines périphériques du conduit qui comportent à leurs extrémités chacune une traversée étanche pour la sortie glissante dans la chambre du câble de mesure et de la sonde correspondante, des dispositifs de traversée étanche pour chacun des ensembles câble-sonde étant également placés sur une paroi de sortie de la chambre de la buselure.

Afin de bien faire comprendre l'invention, on va maintenant décrire à titre d'exemples non limitatifs, en se référant aux figures jointes en annexe, un dispositif de mesure suivant l'invention d'un réacteur nucléaire à eau sous pression.

La figure 1 est une vue schématique en coupe et en élévation de la partie inférieure d'une cuve de réacteur nucléaire à eau sous pression et d'un local d'instrumentation disposé latéralement et au voisinage du fond de cuve.

La figure 2 est une vue en perspective d'une partie d'un conduit de mesure d'un dispositif suivant l'invention.

La figure 3 est une vue en coupe axiale de l'extrémité d'un conduit de mesure du dispositif suivant l'invention.

La figure 4 est une vue en coupe de la partie antérieure de la buselure d'étanchéité d'un dispositif suivant l'invention.

Les figures 5A et 5B sont des vues en coupe de deux tronçons successifs de la partie postérieure de sortie de la buselure d'un dispositif suivant l'invention.

La figure 6 est une vue agrandie du détail 6 de la figure 5B.

La figure 7 est une vue en coupe suivant 7-7 de la figure 5.

La figure 8 est une vue en coupe transversale suivant 8-8 de la figure 4.

La figure 9 est une vue en coupe transversale suivant 9-9 de la figure 5A.

La figure 10 est une vue en coupe transversale suivant 10-10 de la figure 5A.

La figure 11 est une vue en coupe suivant 11-11 de la figure 5B.

La figure 12 est une vue en coupe suivant 12-12 de la figure 5B.

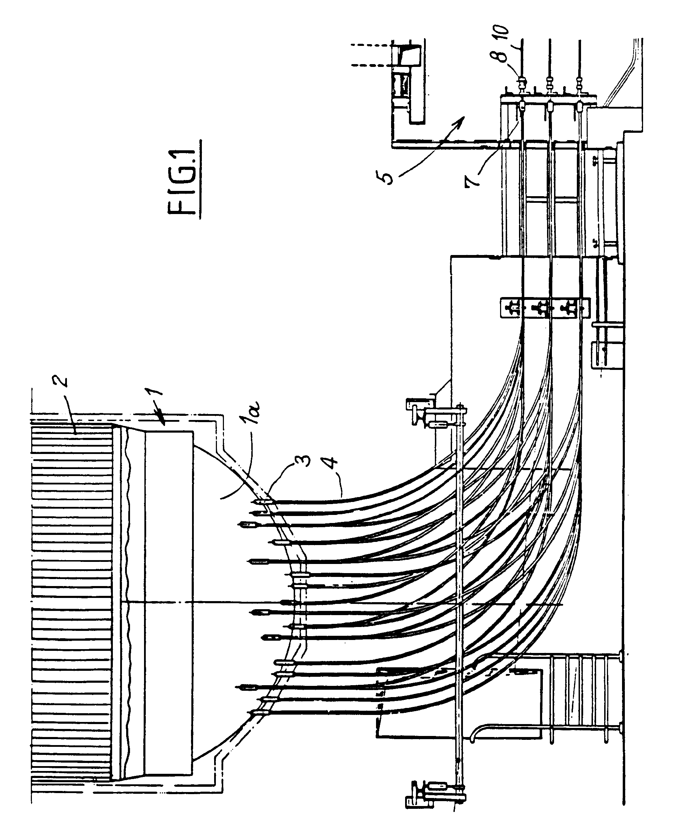

Sur la figure 1, on voit le fond de cuve 1a de la cuve 1 d'un réacteur nucléaire à eau sous pression renfermant le coeur 2 du réacteur constitué par des assemblages combustibles. Le fond 1a de la cuve est traversé par des manchettes 3 à chacune desquelles est raccordé un tube 4 permettant le guidage d'un conduit de mesure. Les tubes de guidage 4 sont cintrés puis dirigés sous la forme de nappes horizontales successives vers un local d'instrumentation 5 disposé à un niveau inférieur au niveau du fond de cuve 1a et latéralement par rapport à la cuve 1. Chacun des conduits de guidage 4 pénètre dans le local d'instrumentation 5 puis est raccordé à une vanne d'isolement 7 et à une buselure d'étanchéité 8 successivement.

La vanne 7 permet de fermer de façon totalement étanche l'extrémité du tube de guidage 4, lorsque le conduit de mesure correspondant a été totalement extrait.

La buselure 8 comporte des dispositifs d'étanchéité permettant un passage étanche et glissant du conduit de mesure correspondant 10.

Sur la figure 1, les buselures d'étanchéité 8 ont été représentées de manière schématique et simplifiée et seront décrites plus en détail dans la suite de la description.

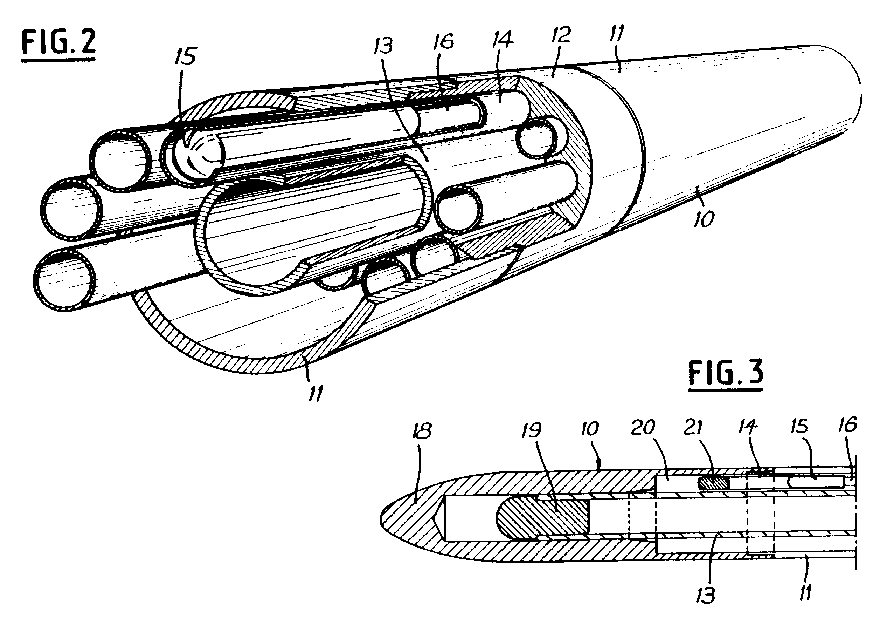

Sur la figure 2, on voit une partie d'un conduit de mesure 10 qui comporte une enveloppe tubulaire externe constituée par des tronçons de tubes metalliques souples 11 assemblés bout à bout par des entretoises telles que 12 assurant le support et le positionnement de la gaine centrale 13 et des gaines périphériques 14 disposées à l'intérieur du conduit de mesure 10 et recevant les sondes de mesure.

La gaine centrale 13 est disposée suivant l'axe du conduit de mesure 10 ; cette gaine est réalisée sous la forme d'un doigt de gant résistant à la pression du fluide primaire du réacteur, c'est-à-dire d'une enveloppe tubulaire fermée à son extrémité destinée à pénétrer dans le coeur du réacteur nucléaire.

Une sonde de mesure neutronique non représentée peut être déplacée à l'intérieur du conduit central 13 par poussée ou traction sur un câble de mesure et de déplacement qui lui est relié.

Les gaines périphériques 14 sont également constituées sous la forme de doigts de gant résistant à la pression du fluide primaire. Ces gaines sont constituées par des tubes capillaires dont le diamètre intérieur est de l'ordre de 1,5 mm, le diamètre intérieur de la gaine centrale 13 étant inférieur à 5 mm.

On a placé dix gaines 14 à la périphérie du conduit central 13. Chacune des gaines 14 reçoit une sonde de mesure 15 fixée à l'extrémité d'un câble 16 qui peut être un câble coaxial assurant la transmission des signaux, de mesure et les déplacements de la sonde 15 à l'intérieur de la gaine 14.

Les gaines 14 sont placées autour du conduit central 13 selon une disposition hélicoïdale avec un pas très allongé correspondant à la longueur de la partie cintrée dans les tubes de guidage. A titre d'exemple, pour un rayon de courbure de 2500 mm, le pas des gaines 14 est fixé à 3927 mm. Cette disposition des gaines 14 suivant un mouvement hélicoïdal permet d'équilibrer les efforts de traction et de compression dus aux variations de longueur pendant le cintrage.

Lorsque le conduit de mesure 10 est placé dans le coeur du réacteur en service, il vient en contact avec le fluide primaire sous pression (320°C et 155 bars) aussi bien par sa partie interne que par sa surface externe.

Les gaines 13 et 14 sont donc soumises à la pression du fluide primaire mais ces gaines de faible diamètre comportant une paroi d'épaisseur relativement forte sont susceptibles de supporter cette pression ; l'ensemble du conduit de mesure 10 reste cependant suffisamment souple pour pouvoir être déplacé à l'intérieur des tubes de guidage 4 du réacteur.

Sur la figure 3, on voit l'extrémité du conduit de mesure 10 constitué par une pièce de fermeture en ogive 18 sur laquelle vient se fixer le tronçon tubulaire souple 11 situé à l'extrémité antérieure du conduit 10. La forme en ogive permet de faciliter l'introduction et le déplacement du conduit de mesure 10 à l'intérieur du tube de guidage correspondant 4 et à l'intérieur des équipements internes de la cuve et du tube guide de l'assemblage combustible.

De préférence, la partie d'extrémité 18 du conduit 10 comporte des perçages traversants mettant en communication la partie interne du conduit de mesure avec le milieu extérieur constitué par de l'eau sous pression, lorsque le conduit de mesure est introduit dans un tube de guidage du réacteur en service.

La gaine centrale 13 est fermée de manière étanche par un bouchon 19 soudé sur la gaine 13 qui constitue ainsi un doigt de gant dans lequel on peut déplacer une sonde de mesure neutronique sur toute la hauteur du coeur, lorsque le conduit de mesure est en place à l'intérieur de l'assemblage combustible correspondant.

Les gaines périphériques 14 sont maintenues dans les perçages 20 de direction axiale de la pièce 18 de façon que l'extrémité 21 puisse se déplacer par rapport à la gaine 10 en raison des mouvements provoqués par la dilatation des matériaux.

Chacune des gaines 14 est fermée à son extrémité, de manière étanche, par un bouchon soudé 21.

Une sonde de mesure 15 reliée à l'extrémité d'un câble coaxial de mesure et de déplacement 16 peut être déplacée à l'intérieur de la gaine 14, sur toute sa longueur, et placée dans une position quelconque suivant la longueur du conduit de mesure 10.

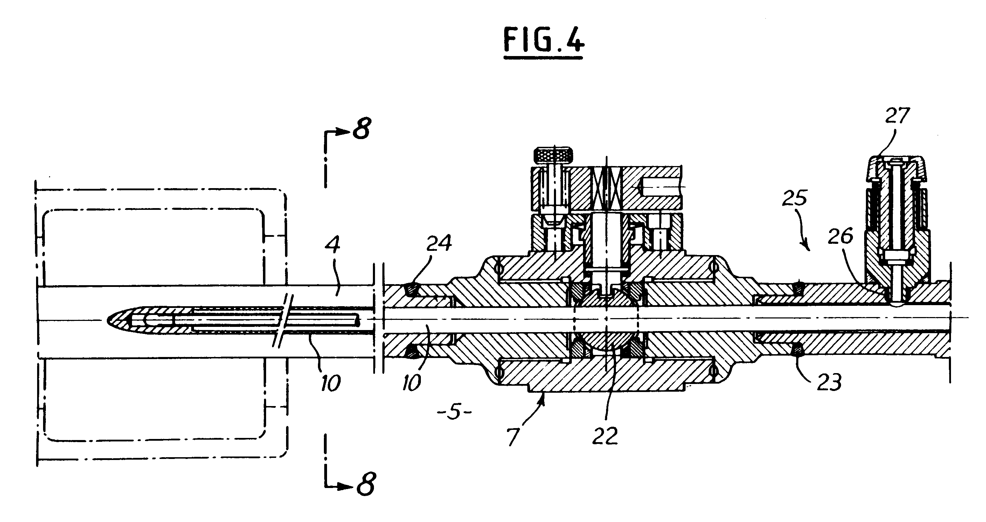

Sur la figure 4, on a représenté l'extrémité du tube de guidage 4 pénétrant dans le local d'instrumentation 5 et reliée à l'extrémité d'une buselure d'étanchéité 25 par l'intermédiaire de la vanne d'isolement 7 comportant un obturateur sphérique 22.

Le conduit de mesure 10 introduit dans l'alésage intérieur du tube 4 présente un diamètre extérieur légèrement inférieur au diamètre de l'alésage du tube 4, ce qui permet un déplacement axial du conduit de mesure pour sa mise en place dans le coeur du réacteur.

La partie antérieure de la buselure 25 est fixée par une soudure 23 sur le corps de la vanne 7 qui est lui-même fixé par une soudure 24 à l'extrémité du tube 4.

Dans la partie d'extrémité antérieure de la buselure est prévue une ouverture 26 dans laquelle est fixée un bouchon 27 permettant d'appliquer une contre-pression dans le tube de guidage pendant le démontage du conduit de mesure 10.

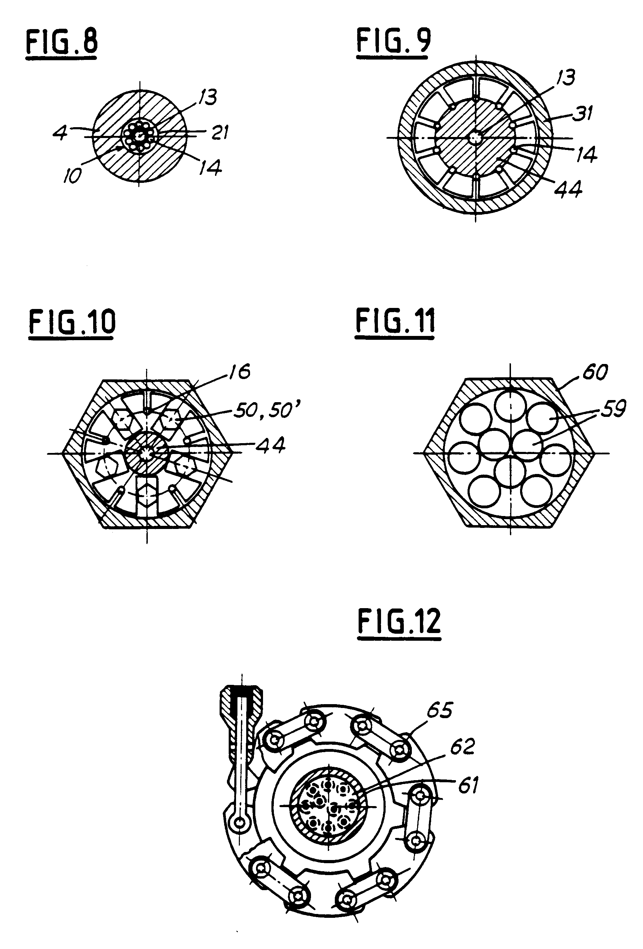

Comme il est visible sur la figure 8, l'alésage intérieur 21 du tube 4 permet un passage avec jeu de la partie courante du conduit de mesure 10 renfermant la gaine centrale 13 et les gaines périphériques capillaires 14.

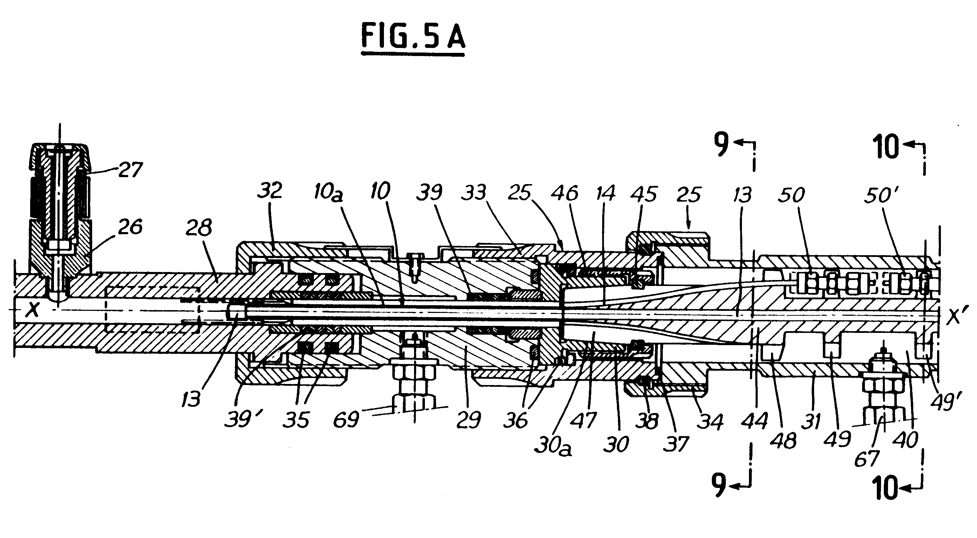

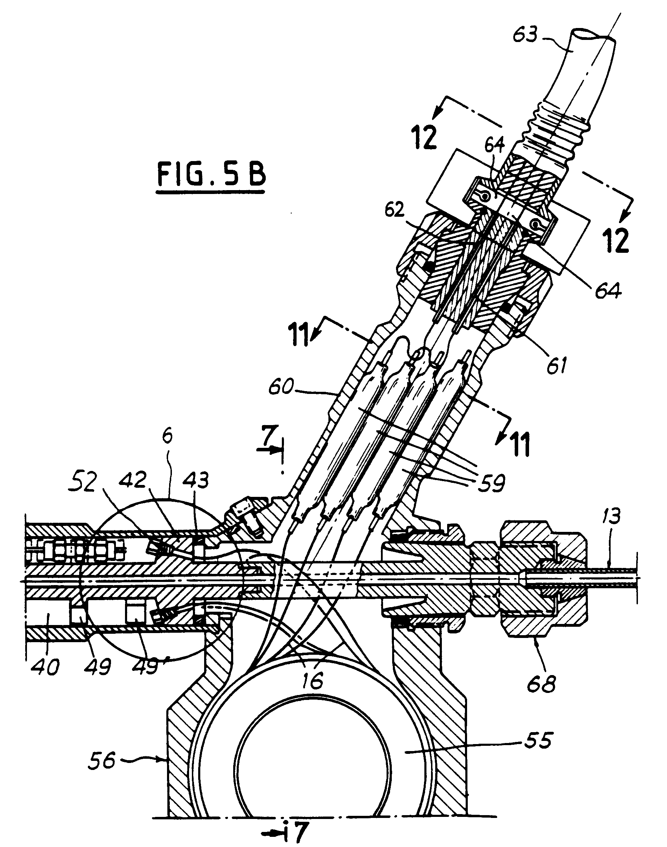

De manière générale, comme il est visible sur les figures 5A et 5B et sur les figures 9 et 10, la buselure d'étanchéité 25 est constituée par un corps tubulaire en plusieurs parties successives 28, 29 et 31 assemblées entre elles par l'intermédiaire d'écrous moletés 32, 33 et 34 et de bagues de clavetage en deux parties telles que 38.

Un tel montage permet d'assurer une démontabilité parfaite à la buselure 25, pour accèder à sa partie centrale renfermant la partie d'extrémité postérieure du conduit de mesure 10.

La partie antérieure 28 de la buselure est assemblée à la partie intermédiaire 29 grâce à l'écrou 32, avec interposition de joints d'étanchéité 35. Les écrous 33 et 34 et la bague de clavetage 38 assurent l'assemblage de la partie intermédiaire 29 et de la partie postérieure 31 dont la section représentée sur les figures 9 et 10 présente certaines parties de forme hexagonale.

La partie postérieure du conduit 10 est solidaire d'une pièce 30 en forme de cloche comportant un alésage intérieur tronconique 30a.

La pièce 30 comporte également deux portées de joints pour des joints d'étanchéité 36 intercalés entre la pièce 30 et les parties 29 et 33 de la buselure 25, respectivement.

Des joints d'étanchéité 39 et 39' sont montés à l'intérieur de l'alésage des pièces 28 et 29 de la buselure 25 respectivement et permettent un montage glissant et étanche du conduit 10 à l'intérieur de la buselure.

La partie terminale postérieure 10a du conduit de mesure 10 est constituée par une pièce délimitant à sa partie centrale un alésage dans lequel la gaine centrale 13 est fixée de manière étanche par soudure et des fentes périphériques pour chacune des gaines 14 qui sont introduites dans ces logement puis recouvertes de soudure. La surface extérieure de la pièce 10a remplie de soudure est ensuite usinée de façon à constituer une surface lisse d'étanchéité coopérant avec les joints 39, 39'.

Lorsque le conduit de mesure 10 est en place dans un tube de guidage 4 du réacteur en service, de l'eau sous pression remplit l'alésage intérieur du tube de guidage 4 et l'alésage intérieur du conduit 10.

La partie interne antérieure de la buselure 25, jusqu'à la pièce 30, renfermant de l'eau sous pression est totalement isolée de la partie interne postérieure de la buselure 25, par les joints 39, 39' et 36.

La pièce 31 de la buselure 25 délimite à sa partie interne une chambre 40 qui est isolée de la partie soumise à la pression du fluide primaire par les joints 36.

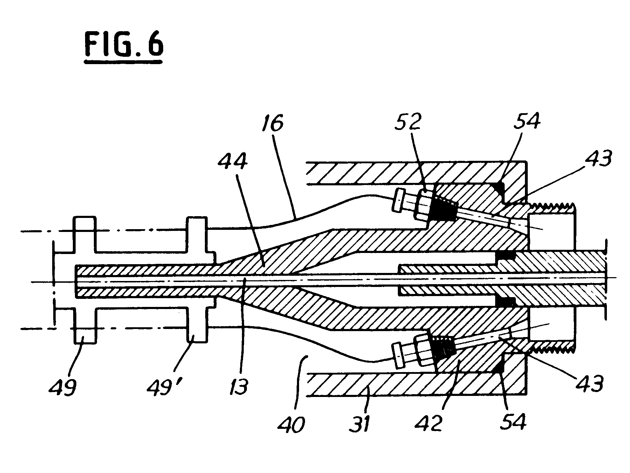

La chambre 40 est de plus isolée du milieu extérieur, c'est-à-dire du local d'instrumentation par une pièce de fermeture 42 qui sera décrite en se référant à la figure 6.

La chambre 40 renferme une pièce de support 44 solidaire de l'extrémité postérieure 10a du conduit de mesure par l'intermédiaire de la pièce 30 en forme de cloche. L'extrémité de la pièce de support 44 de forme tronconique est engagée à l'intérieur de l'alésage 30a de la pièce 30 et assemblée à cette pièce 30 par l'intermédiaire d'une bague de clavetage en deux parties 45 et d'un écrou 46. La pièce 44 est percée à sa partie centrale et sur toute sa longueur pour constituer un alésage de passage de la gaine centrale 13. La pièce de support 44 comporte également dans sa partie tronconique antérieure dix fentes périphériques 47 inclinées par rapport à l'axe XX' du conduit de mesure, dans chacune desquelles est engagée une gaine périphérique 14 dont le parcours, depuis la partie d'extrémité 10a du conduit 10, à travers la pièce 30 puis à travers l'extrémité du support 44, s'éloigne de l'axe XX' du conduit 10 pour atteindre, en périphérie, une ouverture traversant une partie annulaire 48 du support 44.

Le support 44 porte, par l'intermédiaire de deux parties annulaires 49 et 49', deux séries de cinq dispositifs d'étanchéité 50, 50' dans chacun desquels est engagée l'extrémité d'une gaine périphérique 14.

Chacun des dispositifs d'étanchéité 50, 50' permet la sortie étanche et glissante d'un câble 16 portant à son extrémité une sonde de mesure 15 engagée dans une gaine périphérique 14 du conduit de mesure 10.

A la sortie du dispositif d'étanchéité 50 ou 50', le câble 16 est engagé dans un dispositif de passage étanche 52 fixé sur la pièce 42, dans le prolongement d'un canal de traversée 43, comme il est visible sur la figure 6.

La pièce 42 est fixée de manière étanche, grâce à un joint torique 54 à l'intérieur de la pièce 31 délimitant la chambre 40. La pièce 42 assure ainsi la fermeture étanche de la chambre 40.

La pièce 42 est percée à sa partie centrale par un alésage dans lequel la gaine centrale 13 est fixée de manière étanche. La pièce 42 est de plus percée à sa périphérie pour constituer les dix canaux de passage 43 qui sont faiblement inclinés par rapport à l'axe XX'

du conduit 10.

A l'entrée de chacun des canaux 43, vers l'intérieur de la chambre 40, est fixé un dispositif d'étanchéité 52 permettant un passage étanche et glissant d'un câble de mesure et de déplacement d'une sonde 16.

Comme il est visible sur les figures 5A, 5B, 6 et 7, chacun des câbles 16, à sa sortie de la chambre 40 est enroulé sur une bobine de stockage 55 montée dans un support 56 solidaire de l'extrémité postérieure de la buselure 25.

Le support 56 constitue un carter dans lequel sont montées sur un même axe les dix bobines recevant chacune un câble 16 d'une sonde de mesure.

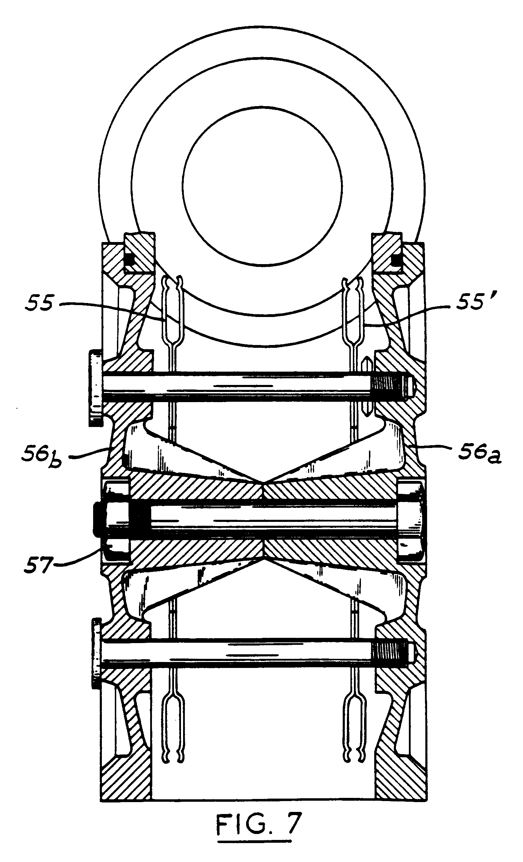

Sur la figure 7, on voit les flasques 56a, 56b du carter 56 fixés sur l'extrémité de la buselure 25 et portant l'axe 57 commun à l'ensemble des bobines 55 comportant à leur partie périphérique une gorge permettant le stockage d'une certaine longueur de câble 16.

A la sortie de la bobine de stockage correspondante 55, chacun des câbles 16 est engagé dans un dispositif de passage étanche 59 logé dans un prolongement oblique 60 du carter 56.

Sur la figure 11, on voit la disposition des passages étanches 59 à l'intérieur de la partie oblique 60 du carter 56.

A la sortie des passages étanches 59, les câbles 16 sont reliés chacun à un plot 61 traversant une pièce isolante 62 et saillant à l'extrémité de la partie oblique 60 du carter fermé par la pièce isolante 62.

La connexion desdits plots 61 peut être assurée en utilisant un dispositif de connexion électrique 63 ayant dix sorties 64 qui peuvent être engagées dans les plots 61. Le dispositif de connexion électrique 63 est relié de manière étanche à l'extrémité du prolongement oblique 60, par l'intermédiaire d'un raccord rapide à chaîne 65 représenté sur la figure 12.

La partie arrière 68 du carter 56 constitue une sortie étanche pour la gaine centrale 13.

Les dispositifs d'étanchéité 50, 50' et 52 sont constitués par des dispositifs du commerce vendus sous la marque "SWAGELOK". De tels dispositifs miniaturisés sont constitués par des pièces tronconiques en contact étanche les unes avec les autres et permettant le passage étanche et glissant des câbles 16 qui sont engagés dans ces dispositifs d'étanchéité.

Les sondes de mesure fixées à l'extrémité des câbles 16 dont le diamètre extérieur est sensiblement égal à celui du câble de mesure et de déplacement correspondant sont également susceptibles de traverser les dispositifs d'étanchéité, lors du réengagement d'une sonde à l'intérieur d'une gaine périphérique capillaire.

Le stockage d'une certaine longueur de câble 16 sur la bobine 55 correspondante à l'intérieur du carter 56 permet d'utiliser un matériel standard quelle que soit la position du tube de guidage par rapport au fond de cuve et quelle que soit la position définitive de la sonde dans le coeur du réacteur nucléaire.

En effet, dans le cas d'un réacteur nucléaire à eau sous pression, d'une puissance électrique de 900 ou 1300 MW, les conduits de mesure qui sont au nombre de cinquante à soixante pour l'ensemble du coeur ont des longueurs différentes suivant la position des assemblage dans lesquels on effectue les mesures. D'autre part, les sondes de mesure, en particulier les sondes de mesure de flux neutronique, peuvent être placées à des hauteurs variables entre la base et le sommet du coeur.

Il en résulte que la longueur du câble de mesure des sondes est essentiellement variable, la différence de longueur entre le câble de mesure le plus court et le câble de mesure le plus long étant de l'ordre de 7 m.

Le dispositif selon l'invention comportant des bobines de stockage de surlongueurs de câbles permet l'utilisation de sondes ayant un câble de longueur standard correspondant à la longueur maximale pour la mise en place de la sonde la plus éloignée dans le coeur.

Lors de la mise en service du conduit de mesure 10, celui-ci est introduit dans la buselure, puis le tube de guidage et le coeur du réacteur sans les sondes de mesure. Le conduit est équipé de ses sondes de mesure après sa mise en place dans le coeur. Chacune des sondes peut être placée de façon très précise à une hauteur déterminée dans le coeur. On peut mesurer la longueur du câble 16 déroulée dans le tube de guidage pour déterminer et contrôler la position de la sonde.

Dans le cas où une sonde est défectueuse, il est possible d'effectuer son extraction sans avoir à démonter le conduit de mesure. Il suffit pour cela de séparer le carter 56 et la pièce 31 de sa buselure 25 et d'opérer une traction sur l'extrémité du câble 16.

On effectue le remplacement d'un ensemble constitué par la sonde 15, son câble 16, la bobine de stockage 55 et le dispositif d'étanchéité correspondant 59. La sonde 15 est engagée dans le conduit de mesure par l'intermédiaire de la pièce 42 dans le canal 43 et le dispositif de passage étanche 52 permet un passage dans la chambre 40. La sonde et son câble 16 sont ensuite engagés dans le dispositif d'étanchéité 50 ou 50' correspondant, ce qui permet l'introduction de la sonde 15 et du câble 16, à l'intérieur de la gaine capillaire 14 correspondante. On effectue alors une avance contrôlée de la sonde jusqu'au moment où cette sonde occupe sa position dans le coeur. Le contrôle de position peut être effectué par un simple contrôle de longueur du câble 16.

Bien entendu, comme dans les dispositifs selon l'art antérieur, il est possible d'extraire complètement le conduit de mesure 10 du coeur par traction sur sa pièce d'extrémité 44, après démontage de la buselure 25. Pendant le déplacement du conduit de mesure, l'étanchéité est maintenue à la périphérie de ce conduit par les joints 39 et 39′ de la partie de la buselure 25 restant solidaire du tube de guidage 4.

Cette opération d'extraction du conduit de mesure est effectuée lorsque le réacteur nucléaire est à l'arrêt, la cuve restant néanmoins remplie d'eau à température ambiante.

Lorsque l'extrémité antérieure du conduit de mesure 10 a été déplacée jusqu'à une position à l'arrière de la vanne 7, on ferme celle-ci pour isoler complètement le tube de guidage et éviter l'écoulement d'eau primaire à l'intérieur du local d'instrumentation.

D'autre part, lorsque le réacteur est en service, le dispositif suivant l'invention permet d'éviter toute fuite d'eau primaire sous pression à l'intérieur du local d'instrumentation.

En effet, l'espace intérieur de la buselure 25 est totalement isolé du milieu extérieur dans sa partie recevant le fluide primaire sous pression.

La chambre 40 dans laquelle sortent les conduits périphériques 14 et les câbles 16 est elle-même totalement isolée à la fois de la partie de la buselure soumise à la pression du fluide primaire et du milieu extérieur.

En fonctionnement normal, le fluide primaire est arrêté par les joints 36 intercalés entre la buselure et la pièce 30 du conduit de mesure.

Dans le cas où une gaine périphérique 14 présenterait une fissure génératrice de fuite à la fois dans sa partie exposée au fluide primaire et dans sa partie située à l'intérieur de la chambre 40, du fluide primaire viendrait s'écouler dans la chambre 40. Grâce à la présence des dispositifs d'étanchéité 50, 50′, ce fluide primaire ne peut cependant pas s'introduire dans les autres gaines périphériques capillaires 14. D'autre part, les dispositifs d'étanchéité 52 interdisent toute fuite de liquide primaire vers l'extérieur de la chambre 40.

Une telle fuite serait détectée facilement par la bougie électrique 67 traversant la paroi de la chambre 40.

Un détecteur de fuite supplémentaire 69 également constitué par une bougie électrique traverse la paroi de la pièce 29 de la buselure pour déterminer la présence éventuelle de fluide primaire entre les joints d'étanchéité 39 et 39′ autour du conduit de mesure 10.

Le dispositif suivant l'invention permet donc d'éviter toute fuite de liquide primaire dans le local d'instrumentation et de détecter la présence de fluide dans certaines parties de la buselure d'étanchéité.

L'invention ne se limite pas au mode de réalisation qui a été décrit.

C'est ainsi qu'on peut envisager l'utilisation de buselures d'étanchéité démontables ayant une forme différente et comportant un nombre de pièces différent.

Les dispositifs d'étanchéité permettant la sortie des câbles peuvent être de tout type permettant une miniaturisation suffisante et une utilisation dans les conditions de service du réacteur.

Le conduit de mesure pourra comporter un nombre quelconque de sondes disposées dans des gaines périphériques, ce nombre étant cependant de préférence égal à 8 ou 10.

Enfin, le dispositif suivant l'invention s'applique à tout réacteur nucléaire comportant un coeur dans lequel on effectue des mesures pendant le fonctionnement du réacteur.

**Revendications**

1.- Dispositif de mesure de paramètres dans le coeur d'un réacteur nucléaire en service, plongé dans un fluide de refroidissement du réacteur remplissant la cuve, comportant un conduit de mesure (10) en contact avec l'eau de refroidissement extérieurement et intérieurement, à l'intérieur duquel est placée, en position centrale et de manière coaxiale, une gaine (13) fermée et étanche pour le guidage d'une sonde mobile de mesure de flux neutronique, et, dans des positions périphériques, une pluralité de sondes (15) de mesure de paramètres physiques du coeur, le conduit de mesure (10) étant monté mobile dans un tube de guidage (4) joignant la cuve (1) du réacteur à un local d'instrumentation (5) dans lequel le conduit de mesure pénètre en traversant de manière glissante et étanche, une buselure d'étanchéité (25) solidaire de l'extrémité du tube de guidage (4), caractérisé par le fait que les sondes de mesure périphériques (15) sont fixées à l'extrémité de câbles souples (16) de mesure et de déplacement, qu'elles sont montées mobiles, chacune à l'intérieur d'une gaine périphérique étanche (14), une pluralité de gaines périphériques (14) étant montées à l'intérieur du conduit de mesure (10), autour de la gaine centrale (13) suivant une disposition hélicoïdale et que la buselure (25) comporte une chambre étanche (40) isolée du fluide primaire de refroidissement et par rapport au local d'instrumentation (5), dans laquelle débouchent les gaines périphériques (14) du conduit (10) qui comportent, à leurs extrémités, chacune un dispositif d'étanchéité (50, 50′) pour la sortie glissante dans la chambre (40), du câble (16) de mesure et de la sonde (15) correspondante, des dispositifs de passage étanche (52) pour chacun des ensembles câble-sonde (15, 16) étant également placés sur une pièce de fermeture (42) de la chambre (40) de la buselure (25).

2.- Dispositif suivant la revendication 1, caractérisé par le fait qu'il comporte de plus, fixé à l'extrémité de la buselure (25) opposée au tube de guidage (4), un carter (56) portant des bobines de stockage (55) pour des surlongueurs de câble (16).

3.- Dispositif suivant la revendication 2, caractérisé par le fait que le carter (56) comporte un prolongement oblique (60) par rapport à l'axe du conduit (10) par lequel les extrémités des câbles (16), en sortie des bobines (55) correspondantes, sont reliées à des plots (62) de branchement électrique, des dispositifs de traversée étanche (59) étant intercalés sur le passage des câbles entre les bobines (55) et les plots (62).

4.- Dispositif suivant la revendication 1, caractérisé par le fait que la buselure (25) est constituée de plusieurs parties successives (28, 29, 31), dans la direction axiale (XX') du conduit de mesure (10), ces différentes parties étant reliées de manière démontable par des écrous (32, 33, 34).

5.- Dispositif suivant la revendication 1, caractérisé par le fait que l'extrémité postérieure du conduit de mesure (10) opposée à son extrémité antérieure destinée à être introduite dans le coeur est solidaire d'une pièce (30) coopérant avec des joints (36) pour assurer l'étanchéité, à l'intérieur de la buselure, entre une partie interne de cette buselure en contact avec le fluide primaire de refroidissement du réacteur et la chambre (40) isolée du fluide primaire.

6.- Dispositif suivant la revendication 5, caractérisé par le fait que la pièce (30) est reliée à sa partie postérieure à une pièce de support (44) placée à l'intérieur de la chambre (40) et sur laquelle sont fixés les dispositifs d'étanchéité (50, 50').

7.- Dispositif suivant la revendication 6, caractérisé par le fait que les dispositifs d'étanchéité (50, 50') disposés à l'extrémité de chacune des gaines périphériques (14) sont placés suivant deux ensembles espacés suivant la longueur axiale de la pièce de support (44).

8.- Dispositif suivant l'une quelconque des revendications 6 et 7, caractérisé par le fait que les dispositifs de passage étanche (52) de la pièce de fermeture (42) de la chambre (40) de la buselure (25) sont inclinés par rapport à l'axe longitudinal (XX') du conduit de mesure (10) et de la buselure (25).

9.- Dispositif suivant l'une quelconque des revendications 1 à 8, caractérisé par le fait qu'un détecteur de liquide (67) constitué par une bougie électrique est disposée dans une ouverture traversant la paroi de la chambre (40).

**Patentansprüche**

1.  Vorrichtung zum Messen von Parametern in dem Kern eines sich in Betrieb befindlichen Kernreaktors, wobei die Vorrichtung in ein Kühlfluid des Reaktors eingetaucht ist, das den Reaktorbehälter füllt, mit einer Meßleitung (10), die innen und außen mit dem Kühlwasser in Kontakt steht, wobei im Inneren der Meßleitung in dessen Mitte und koaxial eine geschlossene und dichte Schutzhülle (13) zur Führung einer beweglichen Neutronenflußmeßsonde angeordnet ist und in periphären Lagen eine Vielzahl von Sonden (15) zur Messung physikalischer Parameter des Kerns angeordnet sind, wobei die Meßleitung (10) beweglich in einem Führungsrohr (4) angeordnet ist, das auf den Reaktorbehälter (1) an einer Instrumentierungsstelle (5) trifft, wo die Meßleitung gleitend und dicht einen Dichtflansch (25) durchquert, der mit dem Ende des Führungsrohrs (4) fest verbunden ist, dadurch **gekennzeichnet**, daß die äußeren Meßsonden (15) am Ende weicher Meß- und Bewegungskabel befestigt sind, daß die Sonden beweglich jeweils im Inneren einer äußeren, dichten Schutzhülle (14) angeordnet sind, wobei eine Vielzahl von äußeren Schutzhüllen (14) im Inneren der Meßleitung (10) um die zentrale Schutzhülle (13) herum spiralförmig angeordnet sind und daß der Dichtflansch (25) eine dichte Kammer (40) aufweist, die von dem Primärkühlfluid und gegenüber der Instrumentierungsstelle (5) isoliert ist, in der die äußeren Schutzhüllen (14) der Leitung (10) münden, die an ihren Enden jeweils eine Dichtvorrichtung (50, 50') für das gleitende Austreten des Meßkabels (16) die entsprechende Sonde (15) in die Kammer (40) aufweist, wobei ebenfalls dichte Durchgänge (52) für jede Kabel-Sondeeinheit (15, 16) auf einem Verschlußteil (42) der Kammer (40) des Dichtflansches (25) vorgesehen sind.

2.  Vorrichtung nach Anspruch 1, gekennzeichnet durch ein Gehäuse (56), das am Ende des Dichtflansches (25) gegenüber dem Führungsrohr (4) angeordnet ist, und Speicherwicklungen (55) für Überlängen des Kabels (16) trägt.

3.  Vorrichtung nach Anspruch 2, dadurch gekennzeichnet, daß das Gehäuse (56) eine bezüglich der Achse der Leitung (10) schräge Verlängerung (60) aufweist, über die die Enden der Kabel (16) am Ausgang der entsprechenden Spulen (55) mit elektrischen Anschlüssen (52) versehen sind, wobei die Vorrichtungen für den dichten Durchgang (59) zwischen dem Durchgang der Kabel zwischen den Spulen (55) und den Anschlüssen (62) angeordnet sind.

4.  Vorrichtung nach Anspruch 1, dadurch gekennzeichnet, daß der Dichtflansch (25) aus mehreren aufeinanderfolgenden Teilen (28, 29, 31) in Axialrichtung (XX') der Meßleitung (10) besteht, wobei die unterschiedlichen Teile abnehmbar über Schraubenmuttern (32, 33, 34) miteinander verbunden sind.

5. Vorrichtung nach Anspruch 1,
dadurch gekennzeichnet, daß
das hintere Ende der Meßleitung (10), das am entgegengesetzten Ende gegenüber dem vorderen Ende, das dazu bestimmt ist, in den Reaktorkern eingeführt zu werden, mit einem Teil (30) fest verbunden ist, das mit den Verbindungen (36) zusammenwirkt, um die Abdichtung im Inneren des Dichtflansches zwischen einem inneren Teil dieses Dichtflansches, der in Kontakt mit dem Kühlprimärfluid des Reaktors ist und der Kammer (40) gewährleistet, die von dem Primärfluid isoliert ist.

6. Vorrichtung nach Anspruch 5,
dadurch gekennzeichnet, daß
das Teil (30) mit seinem hinteren Ende an einem Trägerteil (44) befestigt ist, das im Inneren der Kammer (40) angeordnet ist, und auf dem die Dichtvorrichtungen (50, 50') befestigt sind.

7. Vorrichtung nach Anspruch 6,
dadurch gekennzeichnet, daß
die Dichtvorrichtung (50, 50'), die am Ende einer jeden äußeren Schutzhülle (14) angeordnet sind, entlang zweier Gruppen angeordnet sind, die entlang der Längsachse des Trägerteils (44) beabstandet sind.

8. Vorrichtung nach einem der Ansprüche 6 und 7,
dadurch gekennzeichnet, daß
die dichten Durchgangsvorrichtungen (52) für das Verschlußstück (42) der Kammer (40) des Dichtflansches (25) gegenüber der Längsachse (XX') der Meßleitung (10) und des Dichtflansches (25) geneigt sind.

9. Vorrichtung nach einem der Ansprüche 1 bis 8,
dadurch gekennzeichnet, daß
ein Flüssigkeitsdetektor (57) bestehend aus einer elektrischen Kerze in einer Öffnung angeordnet ist, die die Wandung der Kammer (40) durchquert.

**Claims**

1. Apparatus for measuring parameters in the core of an operational nuclear reactor, submerged in a reactor cooling fluid with which the tank is filled, said apparatus comprising a measuring conduit (10) in contact with the cooling water on the outside and inside, inside which there is placed, in a central, coaxial position, a closed, leaktight sheath (13) for guiding a movable probe for measuring neutron flux and, in peripheral positions, a plurality of probes (15) for measuring physical parameters of the core, the measuring conduit (10) being movably mounted in a guide tube (4) which connects the tank (1) of the reactor to an instrumentation site (5) into which the measuring conduit leads, having passed in sliding, leaktight manner, through a sealing bush (25) fixed to the end of the guide tube (4), characterised in that the peripheral measuring probes (15) are fixed to the ends of flexible measuring and manipulating cables (16), in that they are each mounted to be movable inside a leaktight peripheral sheath (14), a plurality of peripheral sheaths (14) being mounted inside the measuring conduit (10), around the central sheath (13), in a helical arrangement and in that the bush (25) has a leaktight chamber (14) isolated from the primary cooling fluid and relative to the instrumentation site (5), into which the peripheral sheaths (14) of the conduit (10) open, said sheaths (14) each having, at their end, a sealing device (50, 50') for slidingly introducing the measuring cable (16) and the corresponding probe (15) into the chamber (40), whilst leaktight passage devices (52) for each of the cable/probe assemblies (15, 16) are also located on a closure member (42) for the chamber (40) of the bush (25).

2. Apparatus according to claim 1, characterised in that it further comprises a casing (56) fixed to the ends of the bush (25) opposite the guide tube (4), said casing carrying storage reels (55) for excess lengths of cable (16).

3. Apparatus according to claim 2, characterised in that the casing (56) has an extension (60) which is oblique relative to the axis of the conduit (10) by which the ends of the cable (16), emerging from the corresponding reels (55), are connected to electrical connecting contacts (62), leaktight passage devices (59) being interposed along the path of the cables between the reels (55) and the contacts (62).

4. Apparatus according to claim 1, characterised in that the bush (25) is made up of a plurality of successive portions (28, 29, 31) in the axial direction (XX') of the measuring conduit (10), these different portions being releasably connected by means of nuts (32, 33, 34).

5. Apparatus according to claim 1, characterised in that the rear end of the measuring conduit (10) opposite the front end thereof which is adapted to be introduced into the core is integral with a component (30) cooperating with the joints (36) to provide a leaktight seal, inside the bush, between an inner portion of this bush in contact with the primary reactor cooling fluid and the chamber (40) which is isolated from the primary fluid.

6. Apparatus according to claim 5, characterised in that the component (30) is connected, at its rear end, to a support member (44) placed inside the chamber (40), to which are fixed the sealing devices (50, 50′).

7. Apparatus according to claim 6, characterised in that the sealing devices (50, 50′) arranged at the end of each of the peripheral sheaths (14) are located in accordance with two assemblies spaced along the axial length of the support member (44).

8. Apparatus according to either of claims 6 and 7, characterised in that the leaktight passage devices (52) of the closure member (42) of the chamber (40) of the bush (25) are inclined relative to the longitudinal axis (XX′) of the measuring conduit (10) and of the bush (25).

9. Apparatus according to any one of claims 1 to 8, characterised in that a liquid detector (67) consisting of an electric spark plug is arranged in an opening passing through the wall of the chamber (40).

FIG.1

FIG.2

FIG.3

# FIG.4

EP 0 346 170 B1

# FIG. 5 A

EP 0 346 170 B1

EP 0 346 170 B1

FIG. 5 B

15

FIG.6

FIG. 7

# FIG.8

# FIG.9

# FIG.10

# FIG.11

# FIG.12